# EUROPÄISCHE PATENTSCHRIFT

(11) **EP 0 550 467 B1**
(45) Veröffentlichungstag und Bekanntmachung des Hinweises auf die Patenterteilung: **12.04.1995**
(21) Anmeldenummer: 91915485.6
(22) Anmeldetag: 06.09.1991
(51) Int. Cl.: B60R 21/32

(54) **SCHALTUNGSANORDNUNG FÜR DIE INSASSENSCHUTZVORRICHTUNG EINES FAHRZEUGES**
CIRCUIT CONFIGURATION FOR A DEVICE FOR PROTECTING THE PASSENGERS IN A MOTOR VEHICLE
STRUCTURE DE CIRCUIT POUR SYSTEME DE PROTECTION D'UN PASSAGER DANS UN VEHICULE

(30) Priorität: 28.09.1990 DE 4030823
(43) Veröffentlichungstag der Anmeldung: 14.07.1993
(73) Patentinhaber: SIEMENS AKTIENGESELLSCHAFT, 80333 München (DE)
(72) Erfinder: HUBER, Anton, D-8400 Regensburg (DE); NEUGEBAUER, Dieter, D-8412 Regenstauf (DE)
(86) Internationale Anmeldenummer: DE9100708
(87) Internationale Veröffentlichungsnummer: WO9205979

(56) Entgegenhaltungen:
- EP-A- 0 027 747
- EP-A- 0 305 655
- US-A- 3 774 714
- US-A- 3 859 482
- US-A- 3 931 527
- PATENT ABSTRACTS OF JAPAN vol. 13, no. 432 (M-874)(3780) 27. September 1989 &JP,A,1 164 649 ( MITSUBISHI ELECTRIC CORP. ) 28. Juni 1989 sieheZusammenfassung

## Beschreibung

Die Erfindung wurde zwar zunächst für das Airbagsystem eines KFZ entwickelt. Es zeigte sich aber, daß sie darüber hinaus viel allgemeiner auch auf andere, unter den genannten Oberbegriff fallende Anordnungen anwendbar ist. Die Erfindung ist nämlich z.B. auch für Überrollbügel- und Gurtstrammersysteme geeignet, darüber hinaus nicht nur für KFZ, sondern auch für andere Fahrzeuge, z.B. auch für LKWs, im Prinzip sogar für Flugzeuge.

Die Erfindung betrifft die Erhöhung der Zuverlässigkeit der Insassenschutzvorrichtung eines Fahrzeuges sowie ihre nachträgliche Überprüfung. Fehlauslösungen solcher Vorrichtungen sind lebensgefährlich und sollten daher weitestgehend ausgeschlossen werden. Falls aber wirklich eine Fehlauslösung vorkam oder falls eine Auslösung nachträglich in Verdacht steht, eine Fehlauslösung gewesen zu sein, sollte nachträglich auch die Ursache der - ordnungsgemäßen oder fehlerhaften - Auslösung ausreichend ermittelbar sein. Diesen Qualitätsansprüchen soll die Erfindung genügen.

Die Erfindung geht von dem im Oberbegriff des Patentanspruches 1 definierten Gegenstand aus, der für sich durch
- US-A-3 931 527
vorbekannt ist. Durch die Benutzung von zwei Sensoren, die nur dann die Vorrichtung zünden, falls beide Sensoren innerhalb eines vom ersten Sensor festgelegten Zeitfensters crashbedingte Verzögerungen erkennen, ist bereits eine recht hohe Sicherheit gegen Fehlauslösungen des Insassenschutzsystemes erreicht.

Durch die
- EP-A2-0 027 747
ist bereits eine Schaltungsanordnung für ein Airbagsystem, also eine Insassenschutzvorrichtung eines Fahrzeuges, mit einer Vielzahl von Sensoren bekannt. Die Sensoren lösen dort die Vorrichtung aus, wenn sie die ihnen individuell zugeordneten Auslöseschwellen überschreiten. Die Schaltungsanordnung enthält zusätzlich einen programmierbaren Festwertspeicher (PROM) zur Aufzeichnung von den Aufprall charakterisierenden Daten.

In der älteren
- Europäischen Patentanmeldung 90 116 107.5
ist eine Schaltungsanordnung für die Insassenschutzvorrichtung eines Fahrzeuges beschrieben, bei der ein programmierbarer Festwertspeicher zur Aufzeichnung eines Aufprallvorganges dient. Die Insassenschutzvorrichtung wird auch dort erst ausgelöst, wenn mindestens zwei Aufprallsensoren ihre ihnen individuell zugeordneten Auslöseschwellen überschreiten.

Die Aufzeichnung von Daten, welche die Funktion von Steuerungen von Insassenschutzsystemen während eines Aufpralles registrieren, sind dem Fachmann auch aus anderen Schriften bekannt. So ist z.B. durch die
- DE-A-22 63 845
eine Schaltungsanordnung zur Aufzeichnung eines fehlerhaften Betriebes einer Insassenschutzvorrichtung mittels Stromimpulsmessung (Produkt von Zeit und Stromstärke) bekannt, wobei die Insassenschutzvorrichtung einen Airbag enthält.

Sensoren, welche einen Aufprall feststellen können, wurden in einer fast unübersehbar großen Zahl von Veröffentlichungen beschrieben. Beispielsweise ist durch die
- DE-A-25 13 023
ein Sensor zur Feststellung eines Aufpralles bekannt, der eine bewegliche Masse enthält, welche in Fachkreisen oft auch als seismische Masse bezeichnet wird. U.a. ist durch die
- DE-A-22 63 250
ein solcher einen Aufprall feststellender Sensor mit seismischer Masse bekannt, bei dem im Augenblick des Aufpralles in einem Speicher gespeichert wird, in welcher Position sich diese Masse gerade befindet.

Die Aufgabe,
- einerseits durch einen stark unterschiedlichen Aufbau von zwei die Vorrichtung steuernden Sensoren die Zuverlässigkeit dafür zu erhöhen, daß nur bei einem Aufprall, aber noch nicht bei einer andersartigen Erschütterung des Fahrzeuges, das Insassenschutzsystem ausgelöst wird, sowie
- andererseits das Verhalten von mindestens einem der beiden, den Aufprall feststellenden Sensoren in der betreffenden, für die Auslösung des Insassenschutzsystemes relevanten Zeitdauer zuverlässig so zu protokollieren, daß beliebig später nach dem Aufprall wesentliche Umstände, die zur Auslösung führten, rekonstruiert werden können,
wird erfindungsgemäß durch den im Patentanspruch 1 definierten Gegenstand gelöst.

Die in den Unteransprüchen definierten Gegenstände gestatten, zusätzliche Vorteile zu erreichen. U.a. gestatten nämlich die zusätzlichen Maßnahmen gemäß Patentanspruch
2, nach dem Aufprall besonders genau den Verlauf des Aufpralles und die durch diesen Verlauf bewirkte Auslösung des Insassenschutzsystemes rekonstruieren zu können,
3, besonders wenig Aufwand zu erfordern, weil auf einen sich von einer Auslöseschwelle unterscheidenden Schwellwert verzichtet wird, und
4, beim Aufprall nicht nur das Verhalten des zweiten Sensors besonders bei dessen Überschreiten seiner eigenen Auslöseschwelle - protokollieren zu können; falls die Protokollierung der Daten im PROM schon mit Beginn der Zeitdauer beginnt und der Schwellwert des taktgebenden Sensors niedrig genug gewählt wird, kann sogar auch das Verhalten des ersten Sensors protokolliert werden, und zwar sogar beginnend noch bevor dieser erste Sensor seine eigene Auslöseschwelle erreichte.

Die Erfindung und Weiterbildungen derselben werden anhand der in den Figuren gezeigten Ausführungsbeispiele der Erfindung weiter erläutert, welche der Übersichtlichkeit wegen jeweils möglichst einfach dargestellt wurden. Dabei zeigt die Figur
1 ein erfindungsgemäßes Konzept für den Aufbau der Schaltungsanordnung,
2 ein Beispiel für den Verlauf, nämlich das Zeit-Amplituden-Diagramm, des bei einem Aufprall auftretenden Ausgangssignales des zweiten Sensors, der in diesem Beispiel dann ein analoges Signal abgibt, sowie
3 ein Beispiel für den Verlauf, nämlich das Zeit-Amplituden-Diagramm, des bei einem Aufprall auftretenden Ausgangssignales des ersten Sensors, der in diesem Beispiel dann ein binäres Signal abgibt.

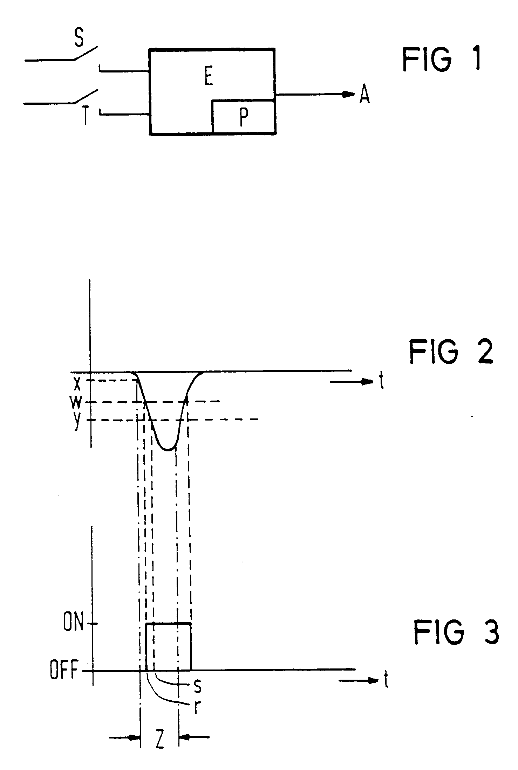

Die erfindungsgemäße Schaltungsanordnung dient zur Aufzeichnung wichtiger Daten in dem programmierbaren Festwertspeicher P, der in Fachkreises auch kurz PROM genannt wird, falls das Fahrzeug in einen Aufprall verwickelt wird. Die Figur 1 zeigt also ein Beispiel für eine solche Schaltungsanordnung, welche hier zwei Sensoren S und T sowie die Steuerschaltung E enthält. In letzterer ist der PROM P angebracht. Die Schaltungsanordnung soll in einem Fahrzeug angebracht werden, welches eine Insassenschutzvorrichtung, z.B. einen oder mehrere Airbags und/oder Gurtstrammer und/oder Überrollbügel, aufweist.

Diese Schaltungsanordnung gibt bei einem Aufprall an ihrem Ausgang einen Steuerimpuls A ab, welcher das Insassenschutzsystem auslöst. Ob die Schaltungsanordnung einen Steuerimpuls A abgibt oder nicht, hängt davon ab, ob bei dem Aufprall mindestens zwei Sensoren, vgl. S, T, die ihnen individuell zugeordneten Auslöseschwellen, vgl. w, y in den Figuren 2 und 3, rechtzeitig überschreiten.

Die Begriffe "erster" und "zweiter" in Verbindung mit den Sensoren S, T sind hier stets so definiert, daß bei dem Aufprall das Ausgangssignal des ersten Sensors, hier sei das der Sensor S, eher als das Ausgangssignal des anderen, zweiten Sensors, hier sei das dann der Sensor T die ihnen jeweils individuell zugeordnete Auslöseschwelle überschreitet, vgl. die in den Figuren 2 und 3 eingetragenen Auslöseschwellen y für den zweiten und w für den ersten Sensor.

Bei der Erfindung startet der erste der beiden Sensoren (hier der Sensor S der zugleich der taktgebende Sensor ist), vgl. gemäß der Figur 2 mit dem Überschreiten eines ihm zugeordneten Schwellwertes x seines Ausgangssignales den Beginn einer Zeitdauer Z. Spätestens in einem Zeitpunkt innerhalb dieser Zeitdauer Z müssen sowohl der erste Sensor S, als auch der zweite Sensor T, ihre Auslöseschwellen w bzw. y überschritten haben, damit das Insassenschutzsystem A endgültig ausgelöst wird. Es mag sogar zugelassen sein, daß zumindest einer dieser Sensoren, z.B. T, schon vor oder bei Beginn der Zeitdauer Z seine individuelle Auslöseschwelle überschreitet.

Im PROM P werden aufprallrelevante Daten über das Verhalten von zumindest einem der beiden Sensoren S, T, - im allgemeinen über das Verhalten beider Sensoren S, T - gespeichert, und zwar über deren Verhalten zumindest während der vom taktgebenden Sensor festgelegten Zeitdauer Z. Eine Speicherung von Daten (zumindest über einen der beiden Sensoren) im PROM P ist erfindungsgemäß zumindest dann vorgesehen, wenn beide Sensoren ihre Auslöseschwelle y, w in einem Zeitpunkt innerhalb dieser Zeitdauer Z überschritten hatten, so daß das Insassenschutzsystem endgültig ausgelöst worden sein müßte.

Dadurch kann man erfindungsgemäß das Verhalten der Sensoren in der betreffenden, für die Auslösung des Insassenschutzsystemes relevanten Zeitdauer zuverlässig so protokollieren, daß beliebig später nach dem Aufprall die bei der Auslösung vorliegenden wichtigsten Umstände rekonstruiert werden können. Im PROM P werden dazu zumindest dann Daten über das während der Zeitdauer Z auftretende Verhalten der Ausgangssignale zumindest des einen der beiden, wenn nicht zusätzlich des anderen der beiden, Sensoren S, T gespeichert, wenn der betreffende Sensor - oder beide Sensoren - seine / ihre Auslöseschwelle w bzw. y überschritt/ überschritten. Dadurch wird das Verhalten der Sensoren S, T in der betreffenden, für die Auslösung des Insassenschutzsystemes relevanten Zeitdauer Z so protokolliert, daß ihr Verhalten, ebenso der Verlauf des Aufpralles selbst, beliebig später nach dem Aufprall ausreichend rekonstruiert werden kann.

Um mit besonders wenig Aufwand auszukommen, vor allem indem man auf einen sich von einer Auslöseschwelle unterscheidenden Schwellwert verzichtet, kann man den Schwellwert x des einem Sensor (hier S) identisch mit dessen Auslöseschwelle w machen, so daß bei einem Aufprall der taktgebende Sensor seine Auslöseschwelle eben gerade bei Beginn der von ihm festgelegten Zeitdauer Z überschreitet.

Um beim Aufprall nicht nur das Verhalten des zweiten Sensors
- besonders bei dessen Überschreiten seiner eigenen Auslöseschwelle - sondern dann auch das Verhalten des ersten Sensors zuverlässig protokollieren zu können, kann man den Schwellwert, vgl. x in der Figur 2, des taktgebenden Sensors kleiner als beide Auslöseschwellen y und w machen, so daß bei einem Aufprall das Ausgangssignal des taktgebenden Sensors seinen Schwellwert x noch deutlich vor dem Erreichen seiner Auslöseschwelle w überschreitet.

Um durch den stark unterschiedlichen Aufbau der betreffenden Sensoren eine hohe Zuverlässigkeit dafür zu erreichen, daß Um durch den stark unterschiedlichen Aufbau der betreffenden Sensoren eine hohe Zuverlässigkeit dafür zu erreichen, daß wirklich nur bei einem Aufprall, aber noch nicht bei einer andersartigen Erschütterung des Fahrzeuges, das Insassenschutzsystem ausgelöst wird, kann man für den einen Sensor - hier im Beispiel ist es der erste Sensor S - einen mechanisch einen Schalter betätigenden Sensor wählen, welcher bei einem Aufprall mehr oder weniger ein binäres Ausgangssignal liefert, vgl. OFF/ON in der Figur 3, also dann einen Strom bzw. eine Spannung EIN- bzw. AUSschaltet. Für den anderen Sensor - dann den zweiten Sensor T - kann man einen elektronischen Sensor wählen, nämlich z.B. einen piezoresistiven oder piezoelektrischen, welcher bei einem Aufprall ein analoges Ausgangssignal liefert.

Um nach dem Aufprall besonders genau den Verlauf des Aufpralles und die durch diesen Verlauf bewirkte Auslösung des Insassenschutzsystemes rekonstruieren zu können, kann man im PROM P solche Daten über das Verhalten von zumindest des einen der beiden Sensoren S, T speichern, daß später nach einem Aufprall aus ihnen sowohl zu erkennen ist, zu welchem Zeitpunkt (!), vgl. s bzw. r, dieser Sensor S und/oder T seine Auslöseschwelle y bzw. w überschritt, als auch die Amplitude, vgl. die Figur 2 bzw. ON in der Figur 3, des Ausgangssignals dieses Sensors S bzw. T zu weiteren, anderen (!) Zeitpunkten innerhalb der Zeitdauer Z.

## Patentansprüche

1. Schaltungsanordnung für die Insassenschutzvorrichtung - z.B. Airbagsystem - eines Fahrzeuges,
- wobei die Insassenschutzvorrichtung ausgelöst wird, wenn mindestens zwei Aufprallsensoren (S, T) ihre ihnen individuell zugeordneten Auslöseschwellen überschreiten, und
- wobei bei einem Aufprall das Ausgangssignal des ersten Sensors (S) eher als das Ausgangssignal des anderen, zweiten Sensors (T) die ihnen jeweils individuel zugeordnete Auslöseschwelle (x bzw. w, y) überschreitet,
- wobei bei dem Aufprall der eine der beiden Sensoren (S, T), genannt der taktgebende Sensor (S), mit dem Überschreiten eines ihm zugeordneten Schwellwertes (x) seines Ausgangssignales den Beginn einer Zeitdauer (Z)festlegt,
- wobei der eine - z.B. der erste - Sensor (S) ein mechanisch einen Schalter betätigender Sensor (S) ist, welcher bei einem Aufprall ein im wesentlichen binäres Ausgangssignal liefert, und
- wobei spätestens in einem Zeitpunkt innerhalb dieser Zeitdauer (Z) sowohl der erste als auch der zweite Sensor (S und T) seine Auslöseschwelle (w bzw. y) überschritten haben muß, damit das Insassenschutzsystem (A) endgültig ausgelöst wird,
**dadurch gekennzeichnet,**
- daß der andere - z.B. der zweite - Sensor (T) ein elektronischer - z.B. ein piezoresistiver oder piezoelektrischer - Sensor (T) ist, welcher bei einem Aufprall ein analoges Ausgangssignal liefert,
- daß die Schaltungsanordnung zur Aufzeichnung eines Aufprallvorganges in einem programmierbaren Festwertspeicher (PROM) dient, und
- daß zumindest dann, falls beide Sensoren (S, T) während des Zeitpunktes innerhalb jener Zeitdauer (Z) ihre Auslöseschwellen (w, y) überschritten hatten, im PROM (P) Daten über das während der Zeitdauer (Z) auftretende Verhalten der Ausgangssignale zumindest des einen (S) der beiden, wenn nicht zusätzlich des anderen (T) der beiden, Sensoren (S und T) gespeichert werden.

2. Schaltungsanordnung nach Patentanspruch 1,
**dadurch gekennzeichnet,**
- daß die im PROM (P) gespeicherten Daten das Verhalten von zumindest des einen der beiden Sensoren (S bzw. T) erkennen lassen hinsichtlich
° sowohl des innerhalb der Zeitdauer (Z) liegenden Zeitpunktes (s bzw. r), zu welchem dieser Sensor (S bzw. T) seine Auslöseschwelle (w bzw. y) überschritt,
° als auch der Amplitude des Ausgangssignals dieses Sensors (S bzw. T) zu anderen Zeitpunkten innerhalb der Zeitdauer (Z).

3. Schaltungsanordnung nach Patentanspruch 1,
**dadurch gekennzeichnet,**
- daß der Schwellwert (x) des taktgebenden Sensors (S) identisch mit dessen Auslöseschwelle (w) ist, so daß bei einem Aufprall der taktgebende Sensor (S) seine Auslöseschwelle (w) bei Beginn der von ihm festgelegten Zeitdauer (Z) überschreitet.

4. Schaltungsanordnung nach einem der vorhergehenden Patentansprüche,
**dadurch gekennzeichnet,**
- daß der Schwellwert (x) des taktgebenden Sensors (S) kleiner als seine Auslöseschwelle (w) ist, so daß bei einem Aufprall das Ausgangssignal des taktgebenden Sensors (S) seinen Schwellwert (x) vor dem Erreichen seiner Auslöseschwelle (y) überschreitet.

## Claims

1. Circuit configuration for the passenger protection device - for example airbag system - of a vehicle,
- the passenger protection device being triggered if at least two collision sensors (S, T) exceed their triggering thresholds individually assigned to them, and
- in the event of a collision, the output signal of the first sensor (S) exceeding before the output signal of the other, second sensor (T) the triggering threshold (x or w, y) respectively individually assigned to them,
- during the collision, one of the two sensors (S, T), known as the clock-generating sensor (S), setting the beginning of a time period (Z) when its output signal exceeds a threshold value (x) assigned to it,
- one - for example the first - sensor (S) being a sensor (S) which mechanically actuates a switch and, in the event of a collision, supplies an essentially binary output signal, and
- at the latest at a point in time within this time period (Z), both the first and the second sensor (S and T) having to have exceeded their triggering threshold (w and y, respectively), in order for the passenger protection system (A) to be finally triggered,
characterized
- in that the other - for example the second - sensor (T) is an electronic - for example a piezoresistive or piezoelectric - sensor (T), which, in the event of a collision, supplies an analogue output signal,
- in that the circuit configuration serves for recording a collision occurrence in a programmable read-only memory (PROM), and
- in that at least then, if both sensors (S, T) had exceeded their triggering thresholds (w, y) during the point in time within that time period (Z), data on the behaviour of the output signals at least of one (S) of the two, if not additionally of the other (T) of the two, sensors (S and T) occurring during the time period (Z) are stored in the PROM (P).

2. Circuit configuration according to Patent Claim 1, characterized
- in that the data stored in the PROM (P) allow the behaviour of at least one of the two sensors (S or T) to be ascertained with regard to
° both the point in time (s and r, respectively) within the time period (Z) at which this sensor (S or T) exceeded its triggering threshold (w and y, respectively),
° and the amplitude of the output signal of this sensor (S or T) at other points in time within the time period (Z).

3. Circuit configuration according to Patent Claim 1,
characterized
- in that the threshold value (x) of the clock-generating sensor (S) is identical to its triggering threshold (w), so that, in the event of a collision, the clock-generating sensor (S) exceeds its triggering threshold (w) at the beginning of the time period (Z) set by it.

4. Circuit configuration according to one of the preceding patent claims,
characterized
- in that the threshold value (x) of the clock-generating sensor (S) is smaller than its triggering threshold (w), so that, in the event of a collision, the output signal of the clock-generating sensor (S) exceeds its threshold value (x) before reaching its triggering threshold (y).

## Revendications

1. Montage pour le dispositif de protection de l'occupant, par exemple, un système à coussin gonflable, d'un véhicule,
- le dispositif de protection de l'occupant étant déclenché, lorsqu'au moins deux capteurs (S, T) de choc dépassent leurs seuils de choc, qui leur sont associés individuellement, et
- lors d'un choc, le signal de sortie du premier capteur (S) dépassant plus tôt que le signal de sortie de l'autre deuxième capteur (T) le seuil (x ou w, y) de déclenchement qui lui est associé individuellement,
- lors du choc, l'un des deux capteurs (S, T), appelé le capteur (S) transmetteur de cadence, déterminant, par le dépassement d'une valeur (x) de seuil, qui lui est associée, de son signal de sortie, le début d'une durée (Z),
- un capteur (S), par exemple, le premier, étant un capteur (S) actionnant mécaniquement un interrupteur, lequel capteur fournit lors d'un choc un signal de sortie sensiblement binaire, et
- aussi bien le premier que le deuxième capteur (S et T) devant avoir dépassé son seuil (w ou y) de déclenchement au plus tard à un instant pendant cette durée (Z), pour que le système (A) de protection de l'occupant soit déclenché définitivement,
caractérisé en ce que
- l'autre capteur (T), par exemple le deuxième, est un capteur (T) électronique, par exemple piezo-résistif, ou piezo-électrique, qui fournit lors d'un choc un signal de sortie analogique,
- le montage sert à enregistrer une opération de choc dans une mémoire (PROM) permanente programmable, et
- des données concernant le comportement, pendant la durée (Z), des signaux de sortie au moins de l'un (S) des deux capteurs (S et T), sinon en plus de l'autre (T) des deux capteurs est mémorisé dans la PROM (P), au moins lorsque les deux capteurs (S, T) ont dépassé à l'instant pendant cette durée (Z) leurs seuils (w, y) de déclenchement.

2. Montage suivant la revendication 1,
caractérisé en ce que
- les données mémorisées dans la PROM (P) permettent d'identifier le comportement d'au moins l'un des deux capteurs (S ou T) du point de vue
° à la fois de l'instant (s ou r) pendant la durée (Z), auquel ce capteur (S ou T) dépasse son seuil (w ou y) de déclenchement,
° et de l'amplitude du signal de sortie de ce capteur (S ou T) à d'autres instants pendant la durée (Z).

3. Montage suivant la revendication 1,
caractérisé en ce que
- la valeur (x) de seuil du capteur (S) transmetteur de cadence est identique à son seuil (w) de déclenchement, de sorte que lors d'un choc le capteur (S) transmetteur de cadence dépasse son seuil (w) de déclenchement au début de la durée (Z) déterminée par lui.

4. Montage suivant l'une des revendications précédentes,
caractérisé en ce que
- la valeur (x) de seuil du capteur (S) transmetteur de cadence est plus petite que son seuil (w) de déclenchement, de sorte que lors d'un choc le signal de sortie du capteur (S) transmetteur de cadence dépasse sa valeur (x) de seuil avant que ne soit atteint son seuil (y) de déclenchement.
